# EUROPÄISCHE PATENTSCHRIFT

(11) **EP 1 048 201 B1**
(45) Veröffentlichungstag und Bekanntmachung des Hinweises auf die Patenterteilung: **10.11.2004**
(21) Anmeldenummer: 00108304.7
(22) Anmeldetag: 15.04.2000
(51) Int. Cl.: A01F 15/07

(54) **Ballenwickelgerät**
Bale wrapping apparatus
Appareil d'emballage de balles de fourrage

(30) Priorität: 28.04.1999 DE 19919322
(43) Veröffentlichungstag der Anmeldung: 02.11.2000
(73) Patentinhaber: DEERE & COMPANY, Moline, Illinois 61265-8098 (US)
(72) Erfinder: Viaud, Jean, 70100 Gray (FR)
(74) Vertreter: Magin, Ludwig Bernhard

(56) Entgegenhaltungen:
- EP-A- 0 391 804
- EP-A- 0 543 145
- EP-A- 0 893 053
- DE-A- 4 243 406
- US-A- 5 822 967

## Beschreibung

Die Erfindung betrifft ein Ballenwickelgerät mit einem an eine Ballenpresse anschließbaren Rahmen und einer Vorrichtung zum Einwickeln eines Ballens, wobei der Rahmen einerseits an der Ballenpresse derart angeschlossen ist, daß er vertikal verschwenkbar ist.

Ballenwickelgeräte werden zur Verpackung von Ballen vorzugsweise von durch Ballenpressen aus Erntegut, beispielsweise aus Gras, gebildeten Ballen genutzt. Diese werden zur Gewinnung von kleineren Silagemengen komplett in ein luftundurchlässiges Material, beispielsweise in eine Folie, eingehüllt.

Die DE-A1-41 20 733 zeigt eine Maschine zum Verpacken eines Ballens mit Folie, mit einem sich auf zwei dicht an der Ballenpresse angeordneten Laufrädern abstützenden Hauptrahmen und einer Vorrichtung zum Verpacken eines Ballens. Der Hauptrahmen ist mit der Ballenpresse starr verbunden. Bei einer solchen Ausführung kann es bei welligem oder unebenem Untergrund dazu kommen, daß eines der Laufräder den Untergrund nicht mehr berührt, insbesondere dann, wenn die Laufräder zur besseren Abstützung in den rückwärtigen Bereich verlagert werden. Hierdurch kann es zu zusätzlichen Belastungen des Rahmens bzw. der Anschlußpunkte kommen.

Die DE-A-42 43 406 zeigt eine Ballenpresse mit einem Ballenwickelgerät, welches neben der Ballenpresse angeordnet ist und dem ein Ballen mittels einer Übergabevorrichtung zugeführt wird. Das Ballenwickelgerät ist mit der Ballenpresse um eine vertikale Achse derart schwenkbar verbunden, dass es sich zur Ballenwicklung über ein Laufrad auf dem Untergrund abstützt und zur Straßenfahrt nach oben geklappt werden kann.

Die EP-A2-0 543 145 zeigt ein Rundballenwickelgerät, welches um eine horizontale Achse verschwenkbar mit einer Rundballenpresse verbunden ist und sich über mehrere Räder auf dem Untergrund abstützt.

Das der Erfindung zugrunde liegende Problem wird in der ungleichmäßigen Belastung bekannter Ballenwickelgeräte auf unebenem Untergrund gesehen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann das Ballenwickelgerät der durch die Ballenpresse bzw. ein Zugfahrzeug vorgegebenen Fahrtrichtung sowohl nach vorne wie auch nach rückwärts folgen und sich dabei dauerhaft mit dem Stützrad, das vorzugsweise an dem Rahmen in üblicher Weise angebracht ist, auf dem Untergrund abstützen, so daß es zu keiner durch Bodenunebenheiten hervorgerufenen Torsionsbelastung des Rahmens bzw. der Verbindung des Ballenwickelgerätes mit der Rundballenpresse kommt, insbesondere dann, wenn das Ballenwickelgerät durch einen Ballen belastet wird. Die Ballenpresse ist vorzugsweise als eine Rundballenpresse ausgeführt, es ist aber auch die Verwendung einer Presse zur Herstellung anderer, beispielsweise quaderförmiger, Ballen denkbar. Das Ballenwickelgerät ist an der Ballenpresse derart anschließbar, daß es in vertikaler Richtung verschwenkbar ist. Auf diese Weise kann das Ballenwickelgerät der Kontour des Untergrundes folgen, wodurch ein Kontakt des Stützrades mit dem Untergrund dauerhaft gewährleistet wird. Vorzugsweise weist das Ballenwickelgerät keine weiteren Bewegungsfreiheitsgrade auf, die über das Verschwenken in vertikaler Richtung hinausgehen, so daß einem Ausscheren des Ballenwickelgerätes bezogen auf die Ballenpresse entgegengewirkt wird.

Ist das Stützrad in der Art eines frei beweglichen Nachlaufrades ausgebildet, so paßt es sich selbsttätig an die durch das Zugfahrzeug bzw. durch die Ballenpresse vorgegebene Fahrtrichtung an. Es ist aber auch denkbar, das Stützrad so vorzusehen, daß es sich nur in einem vorgebbaren Bereich bewegen kann oder das Stützrad, beispielsweise über eine übliche Zwangslenkung, bei der die Stellung des Stützrades beispielsweise aus der Stellung des Zugfahrzeugs zu der Ballenpresse resultiert, oder über eine anderweitige Anordnung lenkbar vorzusehen.

Ist das Stützrad im Bereich des Schwerpunktes des Ballenwickelgerätes angeordnet, wird Torsionsbelastungen des Rahmens vorgebeugt. Es ist sowohl denkbar, hierbei den Schwerpunkt in einem durch einen Ballen belasteten wie auch im unbelasteten Zustand des Ballenwickelgerätes auszuwählen; vorzugsweise wird aber der während des Transports vorherrschende Schwerpunkt des Ballenwickelgerätes selbst ausgewählt.

Ist der Rahmen um eine zumindest annähernd horizontal ausgerichtete Schwenkachse verschwenkbar gelagert, so kann die Verschwenkbarkeit des Ballenwickelgerätes in horizontaler Richtung eingeschränkt bzw. vollständig unterbunden werden. Das Ballenwickelgerät kann so bezogen auf die Ballenpresse nicht ausscheren, wodurch das Ballenwickelgerät dauerhaft direkt hinter der Ballenpresse gehalten wird, was beispielsweise bei der Übergabe eines Ballens vorteilhaft ist.

Das Ballenwickelgerät bzw. der Rahmen kann über eine speziell vorgesehene Anhängevorrichtung, beispielsweise in der Art einer üblichen gelenkigen Verbindung, wie beispielsweise auch eines Kugelgelenks, an der Ballenpresse angeschlossen sein, wobei eine Bewegungsmöglichkeit des Ballenwickelgerätes bezogen auf die Ballenpresse in horizontaler Richtung und nach unten beispielsweise durch an der Ballenpresse und/oder an dem Ballenwickelgerät vorgesehene Führungen bzw. Anschläge unterbunden werden kann. Es ist auch eine Deichselanordnung denkbar, wobei die Bewegungsmöglichkeit des Ballenwickelgerätes beispielsweise durch Lenker oder ähnliches begrenzt werden kann. Eine besonders einfache Ausführungsform besteht darin, das Ballenwickelgerät bzw. dessen Rahmen auf einer Achse der Rundballenpresse, vorzugsweise auf der Achse der rückwärtigen Laufräder der Ballenpresse, vertikal verschwenkbar zu lagern.

Wird an dem Ballenwickelgerät bzw. an dessen Rahmen ein zusätzliches Hilfsstützrad vorgesehen, so kann dieses bei einer Belastung des Ballenwickelgerätes durch einen zu verpackenden Ballen, das zusätzliche Gewicht auf dem Untergrund abstützen, wenn sich der Rahmen des Ballenwickelgerätes unter der Belastung im Bereich der ihm innewohnenden Flexibilität tordiert, um so übermäßigen Torsionsbelastungen, die zu Verformungen oder Beschädigungen führen könnten, vorzubeugen. Dieses Hilfsstützrad steht nicht in dauerhaftem Kontakt mit dem Untergrund und weist im unbelastetem Zustand des Ballenwickelgerätes einen Abstand, beispielsweise in einer Größenordnung von ca. 5 cm auf; es sind aber auch geringere oder größere Abstände denkbar. Das Hilfsstützrad kann beispielsweise ebenfalls als frei oder eingeschränkt pendelndes Nachlaufrad oder als ein nicht auslenkbares Spurrad ausgeführt sein.

In der Zeichnung ist ein nachfolgend näher beschriebenes Ausführungsbeispiel der Erfindung dargestellt. Es zeigt:
- Fig. 1: ein an eine Ballenpresse angeschlossenes Ballenwickelgerät in einer ersten Stellung, die das Ballenwickelgerät zum Einwickeln bzw. Verpacken eines Ballens einnimmt, und
- Fig. 2: das Ballenwickelgerät aus Fig. 1 in einer zweiten Stellung, die das Ballenwickelgerät einnimmt, um einen von der Ballenpresse abgegebenen Ballen aufzunehmen.

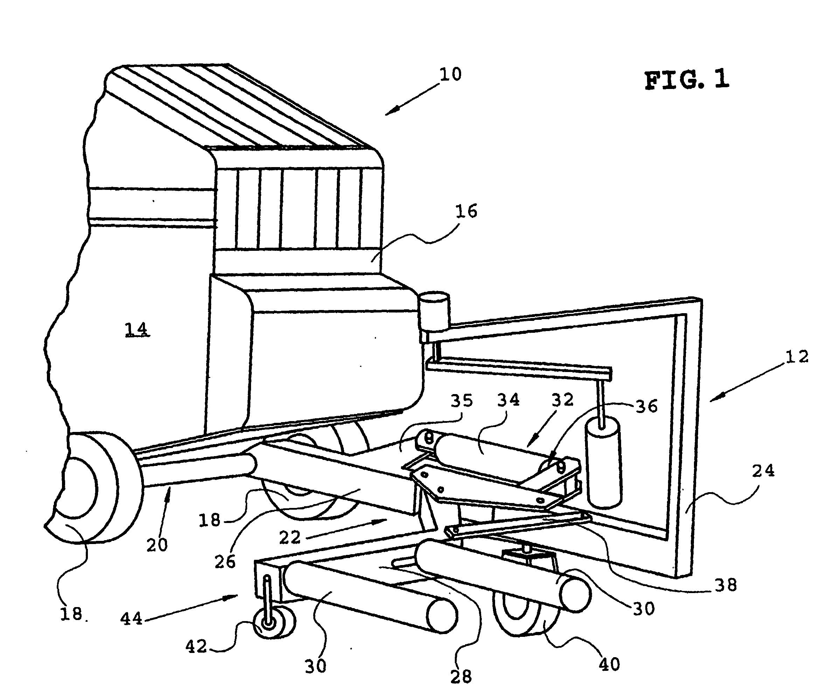

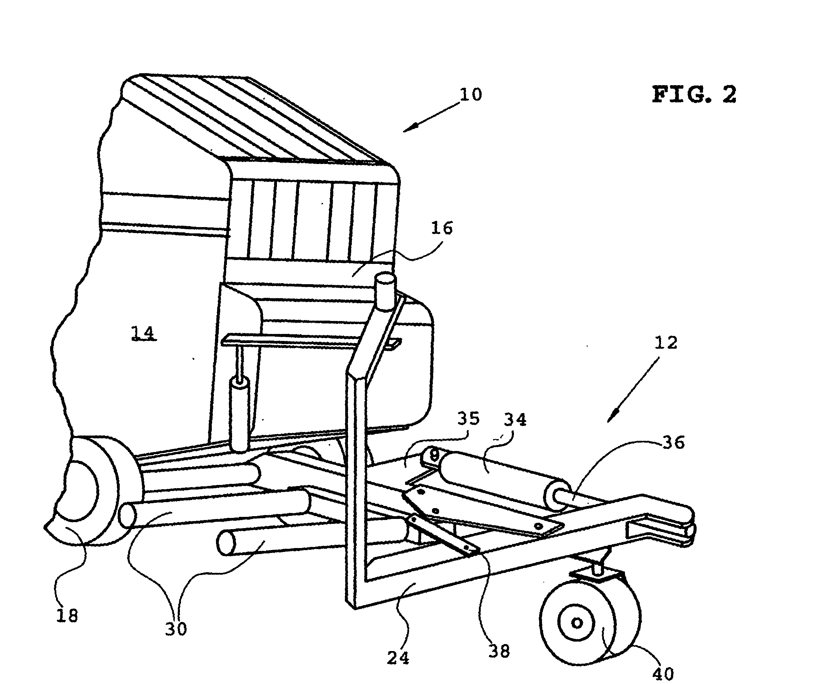

Fig. 1 und Fig. 2 zeigen eine an ein nicht gezeigtes Zugfahrzeug, wie beispielsweise eine landwirtschaftliche Arbeitsmaschine bzw. einen Ackerschlepper, anhängbare Ballenpresse 10 mit einem angeschlossenen Ballenwickelgerät 12 zum Einpacken bzw. Einwickeln eines nicht gezeigten Ballens in ein vorzugsweise luftundurchlässiges Material, wie beispielsweise eine Folie.

Die nur teilweise dargestellte Ballenpresse 10 weist ein Gehäuse 14 auf, das einen nicht gezeigten Mechanismus zur Bildung eines Rundballens, beispielsweise in der Art eines bekannten Ballenbildungsmechanismus mit umlaufenden Riemen, beherbergt. In einem rückwärtigen Bereich des Gehäuses 14 ist eine Klappe 16 vorgesehen, die nach abgeschlossenem Ballenbildungsvorgang geöffnet werden kann, um den Rundballen aus dem Inneren der Ballenpresse 10 zu entlassen. Das Gehäuse 14 stützt sich mittels Laufrädern 18 auf dem Boden ab. Die Laufräder 18 sind an das Gehäuse 14 über eine Achse 20 angeschlossen und sind üblicherweise nicht angetrieben.

Das Ballenwickelgerät 12 weist einen Rahmen 22 auf, der eine Vorrichtung 24 zum Einwickeln oder Verpacken eines Ballens mit einem Wickelarm 25 trägt, wie sie beispielsweise in der DE-A1-41 20 733 ausführlich beschrieben wird, deren Inhalt hiermit in die Offenbarung der vorliegenden Anmeldung eingeschlossen wird.

Der Rahmen 22 ist geteilt ausgebildet und weist einen ersten Rahmenteil 26 und einen zweiten Rahmenteil 28 auf, die gelenkig miteinander verbunden sind. An dem zweiten Rahmenteil 28 sind in etwa parallel ausgerichtete sich in zumindest annähernd horizontaler Richtung erstreckende Walzen 30 zur Aufnahme eines von der Ballenpresse 10 abgegebenen Ballens vorgesehen, von denen zumindest eine entlang des Rahmens 22 bzw. entlang einer nur andeutungsweise gezeigten Führung an dem zweiten Rahmenteil 28 linear verschoben werden kann, um den Ballen nach erfolgtem Wickelvorgang auf dem Boden ablegen zu können. Die Walzen 30 können durch einen nicht dargestellten Motor in Rotation versetzt werden, so daß ein auf den Walzen 30 aufliegender Ballen in Drehung versetzt und von dem Wickelarm 25 der Vorrichtung 24 vollständig mit Material umwickelt werden kann. Anstelle einzelner Walzen 30 könnten auch paarweise oder anderweitig gruppierte Walzen oder ein üblicher Wickeltisch, auf dem der Ballen beispielsweise über angetriebene Riemen in Rotation versetzt werden kann, eingesetzt werden.

An dem Rahmen 22 ist darüber hinaus ein Betätigungsmittel 32 in Form eines doppeltwirkenden Hydraulikmotors mit einem Zylinder 34 und einem Kolben 36 vorgesehen, der durch eine nicht gezeigte Druckquelle mit Hydraulikdruck beaufschlagt werden kann. Das Betätigungsmittel 32 ist einenends mit seinem Zylinder 34 an einem Vorsprung 35, der von dem ersten Rahmenteil 26 horizontal zur Außenseite des Ballenwickelgerätes 12 hin absteht, und andernends mit seinem Kolben 36 an dem Wickelarm 25 angeschlossen, der mit dem ersten Rahmenteil 26 derart verbunden ist, daß er um eine vertikale Schwenkachse verschwenkbar ist. Der Wickelarm 25 ist über einen Hebel 38 mit dem zweiten Rahmenteil 28 verbunden, wobei der Hebel 38 sowohl an dem Wickelarm 25 als auch an dem zweiten Rahmenteil 28 gelenkig angeschlossen ist.

Der erste Rahmenteil 26 ist andernends an der Achse 20 der Ballenpresse 10 in einem Seitenbereich der Ballenpresse 10 über ein nicht dargestelltes Lager derart angeschlossen, daß er um eine zumindest annähernd horizontal ausgerichtete Schwenkachse vertikal verschwenken kann, ansonsten aber keinen weiteren Bewegungsfreiheitsgrad aufweist.

Der Rahmen 22 stützt sich über ein Stützrad 40 auf dem Untergrund ab, das als Nachlaufrad bzw. Pendelrad ausgebildet ist, das heißt, das derart gelagert ist, daß es um eine zumindest annähernd vertikale Achse frei verschwenken kann, um der durch das Zugfahrzeug bzw. durch die Ballenpresse 12 vorgegebenen Fahrtrichtung zu folgen. Das Stützrad 40 ist an dem ersten Rahmenteil 26 im Bereich des Schwerpunkts des Ballenwickelgerätes 12 im unbelasteten Zustand, das heißt, wenn sich kein Ballen auf dem Ballenwickelgerät 12 befindet, angeordnet. An dem Rahmen 22 kann noch ein weiteres, kleineres Hilfsstützrad 42 vorgesehen sein, das bei unbelastetem Ballenwickelgerät 12 den Untergrund üblicherweise nicht berührt und das in dem gezeigten Ausführungsbeispiel als ein frei schwenkbares Nachlaufrad ausgeführt ist, das an dem zweiten Rahmenteil 28 in dessen freiem Endbereich 44 angebracht ist.

Im Fahrbetrieb, wenn das Ballenwickelgerät 12 im durch einen Rundballen unbelastetem Zustand von der an das Zugfahrzeug angehängten Ballenpresse 10 gezogen wird, stützt sich das Ballenwickelgerät 12 nur über das Stützrad 40 auf dem Boden ab. Die in vertikaler Richtung verschwenkbare Lagerung des Rahmens 22 an der Achse 20 der Ballenpresse 10 ermöglicht es dem Ballenwickelgerät 12, der Kontour des Untergrunds zu folgen, wobei das Stützrad 40 immer in Kontakt mit dem Untergrund bleibt. Durch die in horizontaler Richtung unbewegliche Lagerung des Rahmens 22 ist auch ein Zurücksetzen des Verbundes von Ballenpresse 10 und Ballenwickelgerät 12 möglich, ohne daß es zu einem Ausscheren des Ballenwickelgerätes 12 kommen kann.

Auch im Wickelbetrieb, das heißt, wenn das Ballenwickelgerät 12 durch einen von der Ballenpresse 10 nach Abschluß des Preßvorgangs abgegebenen Ballen belastet wird, stützt sich das Ballenwickelgerät 12 über das Stützrad 40 auf dem Untergrund ab. Durch das zusätzliche Gewicht des Ballens kann auch das Hilfsstützrad 42, beispielsweise bei weichem Untergrund, kurzzeitig in Kontakt mit dem Untergrund gelangen, da sich der Rahmen 22 im Bereich der ihm innewohnenden Flexibilität tordieren kann. Der Rahmen 22 kann sich dann über das Hilfsstützrad 42 auf dem Untergrund abstützen, um einer übermäßigen Torsion des Rahmens 22 und damit Beschädigungen vorzubeugen.

Durch das Betätigungsmittel 32 kann der Rahmen 22 des Ballenwickelgeräts 12 zwischen einer in Fig. 2 gezeigten Übernahmestellung und einer in Fig. 1 dargestellten Wickelstellung verstellt werden. Hierzu wird das Betätigungsmittel 32 durch die nicht gezeigte Hydraulikdruckquelle mit Druck beaufschlagt, wodurch der Kolben 36 in dem Zylinder 34 aus- bzw. eingefahren wird. Ist der Kolben 36 eingefahren, befindet sich der Rahmen 22 in der in Fig. 1 gezeigten Wickelstellung, in der der erste Rahmenteil 26 und der zweite Rahmenteil 28 in etwa L-artig zueinander ausgerichtet sind. In dieser Stellung befindet sich der zweite Rahmenteil 28 in einem solchen Abstand von der Klappe 16 der Ballenpresse 10, daß ein auf den Walzen 30 aufliegender Ballen durch die Walzen 30 in Rotation versetzt und durch die Vorrichtung 24 mit Material umwickelt werden kann und trotzdem die Klappe 16 wieder geschlossen werden kann, um in der Ballenpresse 10 die Bildung eines neuen Ballens zu ermöglichen.

Um die Übergabe eines Ballens nach Abschluß des Preßvorgangs bei geöffneter Klappe 16 von der Ballenpresse 10 an das Ballenwickelgerät 12 zu erleichtern, wird der zweite Rahmenteil 28 näher an die Ballenpresse 10 herangebracht. Hierzu wird der Kolben 36 des Betätigungsmittels 32 ausgefahren, wodurch der Wickelarm 25 und damit auch der zweite Rahmenteil 28 jeweils um die gelenkige Verbindung mit dem ersten Rahmenteil 26 vorzugsweise um etwa 90° verschwenkt wird, so daß der zweite Rahmenteil 28 an dem ersten Rahmenteil 26 anliegt und die Walzen 30 entsprechend der Darstellung in Fig. 2 derart angeordnet sind, daß der aus der Ballenpresse 10 austretende Ballen durch die Walzen 30 aufgenommen werden kann. Im Anschluß erfolgt ein Einfahren des Kolbens 36 des Betätigungsmittels 32, so daß der Wickelvorgang in der in Fig. 1 gezeigten L-förmigen Stellung des Rahmens 22 durchgeführt und die Klappe 16 geschlossen werden kann.

Eine Verstellung des Betätigungsmittels 32 kann in einfacher Weise beispielsweise durch den Fahrer des nicht gezeigten Zugfahrzeugs veranlaßt werden, indem dieser beispielsweise durch die Betätigung eines Schalters ein Magnetventil betätigt, so daß entweder ein kolbenseitiger Bereich oder ein dem Kolben 36 abgewandter Bereich des Betätigungsmittels 32 mit Druck beaufschlagt wird. Es ist aber auch denkbar, das Ein- und Ausfahren des Kolbens 36 des Betätigungsmittels 32 und damit eine Veränderung der Position des zweiten Rahmenteils 28 bezogen auf den ersten Rahmenteil 26 in Abhängigkeit von dem Betriebszustand der Ballenpresse 10 anzusteuern. Beispielsweise kann die Verstellung in die in Fig. 2 gezeigte Stellung durch ein Ausfahren des Kolbens 36 des Betätigungsmittels 32 dann erfolgen, wenn ein an der Ballenpresse 10 vorgesehener Sensor meldet, daß die Klappe 16 zur Ausgabe des Ballens öffnet oder aber auch wenn ein Sensor meldet, daß der Preß- oder Bindevorgang abgeschlossen ist. Hierzu kann der Ausgabewert des Sensors durch eine Steuereinheit aufgenommen werden, die wiederum entsprechend der zuvor beschriebenen manuellen Betätigung ein Magnetventil ansteuert, über das das Betätigungsmittel 32 mit Druck beaufschlagt wird.

Nach Beendigung des Wickelvorgangs kann die entlang der nur angedeutet gezeigten Führung linear verschieblich angeordnete Walze 30 in ihre von der ersten Walze 30 am weitesten beabstandete Stellung gebracht werden, so daß der Ballen auf dem Untergrund aufliegt. Der Ballen bleibt in dieser Position auf dem Untergrund liegen, während sich das Zugfahrzeug mit der Ballenpresse 10 und dem angeschlossenen Ballenwickelgerät 12 weiterbewegt. Eine Verstellung der Walze 30 kann beispielsweise über einen Hydraulikmotor oder einen anderen Antrieb erfolgen. In einfacher Weise ist auch die Realisierung mittels eines Riegels möglich, der nach Abschluß des Wickelvorgangs gelöst wird, wodurch sich die Walze 30 aufgrund des Gewichts des Ballen gegen die Wirkung einer Feder verschiebt. Nach dem Ablegen des Ballens bringt die Feder die Walze 30 wieder in ihre Ausgangsstellung, in der der Riegel geschlossen wird. Auch das Öffnen und Schließen des Riegels kann über die Steuerung, beispielsweise über einen Magnetschalter, erfolgen. Es ist aber auch möglich, daß die einzelnen Funktionen durch eine Bedienungsperson, beispielsweise durch den Fahrer eines Zugfahrzeugs ausgelöst bzw. gesteuert werden.

## Patentansprüche

1. Ballenwickelgerät mit einem an eine Ballenpresse (10) anschließbaren Rahmen (22) und einer Vorrichtung (24) zum Einwickeln eines Ballens, wobei der Rahmen (22) einerseits an der Ballenpresse (10) derart angeschlossen ist, daß er vertikal verschwenkbar ist, **dadurch gekennzeichnet, daß** der Rahmen (22) sich andererseits über nur ein Stützrad (40) dauerhaft auf dem Untergrund abstützt.

2. Ballenwickelgerät nach Anspruch 1, **dadurch gekennzeichnet, daß** das Stützrad (40) in der Art eines Nachlaufrades ausgebildet ist.

3. Ballenwickelgerät nach einem oder mehreren der vorherigen Ansprüche, **dadurch gekennzeichnet, daß** das Stützrad (40) im Bereich des Schwerpunkt des Ballenwickelgerätes (12) angeordnet ist.

4. Ballenwickelgerät nach einem oder mehreren der vorherigen Ansprüche, **dadurch gekennzeichnet, daß** der Rahmen (22) um eine zumindest annähernd horizontal ausgerichtete Schwenkachse verschwenkbar ist.

5. Ballenwickelgerät nach Anspruch 4, **dadurch gekennzeichnet, daß** das Ballenwickelgerät (12) bzw. der Rahmen (22) auf einer Achse (20) der Ballenpresse (10) verschwenkbar gelagert ist.

6. Ballenwickelgerät nach einem oder mehreren der vorherigen Ansprüche, **gekennzeichnet durch** ein zusätzliches Hilfsstützrad (42), das nicht in dauerhaftem Kontakt mit dem Untergrund steht und das vorzugsweise an dem Rahmen (22) anbringbar ist.

## Claims

1. Bale wrapping apparatus with a frame (22) attachable to a baler (10) and a device (24) for wrapping a bale, wherein the frame (22) can on the one hand be so attached to the baler (10) that it can pivot vertically, **characterized in that** the frame (22) is on the other hand supported continuously on the ground by only one support wheel (40).

2. Bale wrapping apparatus according to claim 1, **characterized in that** the support wheel (40) is in the form of a caster wheel.

3. Bale wrapping apparatus according to one or more of the preceding claims, **characterized in that** the support wheel (40) is arranged in the region of the centre of gravity of the bale winding apparatus (12).

4. Bale wrapping apparatus according to one or more of the preceding claims, **characterized in that** the frame (22) can pivot about a pivot axis aligned at least approximately horizontally.

5. Bale wrapping apparatus according to claim 4, **characterized in that** the bale wrapping apparatus (12) or the frame (22) is pivotally mounted on an axle (20) of the baler (10).

6. Bale wrapping apparatus according to one or more of the preceding claims, **characterized by** an additional auxiliary support wheel (42) which is not in continuous contact with the ground and which can preferably be fitted on the frame (22).

## Revendications

1. Appareil pour l'emballage de balles, comportant un cadre (22), pouvant être associé à une presse à balles (10), et un dispositif (24) pour l'enveloppement d'une balle, le cadre (22) étant associé à la presse à balles (10) d'une part d'une manière telle qu'il peut pivoter verticalement, **caractérisé en ce que** le cadre (22) ne s'appuie d'autre part durablement sur le sol que par l'intermédiaire d'une roue d'appui (40).

2. Appareil pour l'emballage de balles selon la revendication 1, **caractérisé en ce que** la roue d'appui (40) est réalisée sous forme d'une roue suiveuse.

3. Appareil pour l'emballage de balles selon l'une des revendications précédentes, **caractérisé en ce que** la roue d'appui (40) est placée dans la zone du centre de gravité de l'appareil pour l'emballage de balles (12).

4. Appareil pour l'emballage de balles selon l'une des revendications précédentes, **caractérisé en ce que** le cadre (22) peut basculer autour d'un axe de basculement orienté au moins sensiblement horizontalement.

5. Appareil pour l'emballage de balles selon la revendication 4, **caractérisé en ce que** l'appareil pour l'emballage de balles (12) ou le cadre (22) sont montés basculables autour d'un axe (20) de la presse à balles (10).

6. Appareil pour l'emballage de balles selon l'une des revendications précédentes, caractérisé en ce par une roue d'appui auxiliaire additionnelle (42) qui n'est pas en contact durable avec le sol, et qui peut être monté de préférence sur le cadre (22).
